# EUROPEAN PATENT APPLICATION

(11) **EP 4 691 249 A1**
(43) Date of publication of application: **11.02.2026**
(21) Application number: 24780286.1
(22) Date of filing: 26.03.2024
(51) Int. Cl.: A23G 1/36, A23G 1/48

(54) **CHOCOLATE AND METHOD OF PRODUCING SAME**

(30) Priority: 31.03.2023 JP 2023058471
(71) Applicant: Lotte Co., Ltd., Tokyo 160-0023 (JP)
(72) Inventor: SAITO, Keisuke, Saitama-shi, Saitama 336-0027 (JP); TANAKA, Ryohei, Saitama-shi, Saitama 336-0027 (JP)
(74) Representative: Wächtershäuser & Hartz Patentanwaltspartnerschaft mbB
(86) International application number: PCT/JP2024/011908
(87) International publication number: WO 2024/204173

(57) **Abstract**

To provide a delicious chocolate that uses a plant-based milk material, has little grain-like odor, has a rich taste, and is no different from the case where a milk raw material is used. A chocolate comprising 5 to 30% by weight of a plant-based milk material, the chocolate being characterized in that a volume average diameter when a particle size distribution is measured using a wet-type laser diffraction/scattering method is 20 µm or less, and a 90% passing diameter is 50 µm or less.

## Description

### Technical Field

The present invention relates to a chocolate and a production method thereof, and particularly relates to a chocolate using a plant-based milk and a production method thereof.

### Background Art

Chocolate is a confectionary product in which cacao mass, which is obtained by fermenting and roasting cacao seeds, is used as a main raw material, and sugar, cocoa butter, powdered milk, and the like are mixed therewith and kneaded and solidified. However, in recent years, due to consumer health consciousness, the need for chocolate that does not contain milk raw materials such as powdered milk, which are animal-derived materials, is increasing, and it has been proposed to produce chocolate using soy milk, oat milk, or the like, which are plant-based milk materials, instead of milk raw materials (Patent Literatures 1 and 2). Additionally, although not necessarily used as a substitute for milk raw materials, a confectionary composition containing a bran-like material whose flavor is acceptable in the confectionary composition has also been proposed (Patent Literature 3).

### Citation List

### Patent Literature

PTL 1: International Publication No. WO 2019/244835
PTL 2: Chinese Patent Application Publication No. CN108477364A
PTL 3: Japanese Patent No. 7217151

### Summary of Invention

### Technical Problem

However, when milk raw materials such as powdered milk are replaced with plant-based milk materials such as soy milk or oat milk, the "grain-like odor" derived from the plant materials may impair the deliciousness of the chocolate, and there is a drawback that it is difficult to produce a rich taste compared to when milk raw materials are used.

### Solution to Problem

The present invention solves the above-described problem by providing a chocolate comprising 5 to 30% by weight of a plant-based milk material, wherein a volume average diameter when a particle size distribution is measured using a wet-type laser diffraction/scattering method is 20 µm or less, and a 90% passing diameter is 50 µm or less.

### Advantageous Effects of Invention

It is possible to provide a delicious chocolate that uses a plant-based milk material, has little grain-like odor, has a rich taste, and is no different from the case where a milk raw material is used.

### Description of Embodiments

To produce chocolate, a raw material composition is produced by adding sugar, cocoa butter, and a milk material to cacao mass, which is a main raw material, and mixing them well (mixing step). This raw material composition is further finely ground (fine pulverization step) to make the mouthfeel smooth. Thereafter, this is kneaded (conching step) to adjust the aroma, and further, the crystallization of cocoa butter is performed by temperature adjustment (tempering step). While removing air bubbles by applying vibration, the mixture is poured into a mold, cooled and solidified, and then removed from the mold, which is a general way to obtain a final product.

The four steps of mixing, fine pulverization, conching, and tempering described above are important steps that determine the mouthfeel and aroma of the chocolate, for better or for worse, and there is much room for ingenuity in each step. The present inventors have experimentally found that, in chocolate produced using a plant-based milk material, in order to reduce the grain-like odor and impart a rich taste, adjusting the particle size distribution of the particles constituting the composition after the fine pulverization step, more specifically, mixing the plant-based milk material with normal chocolate raw materials and adjusting the particle size distribution through the fine pulverization step is the key.

In the present specification, a cacao bean refers to what is obtained by fermenting and drying the seeds of cacao (scientific name: Theobroma cacao). A cacao nib refers to what is obtained by removing the shell from cacao beans. Cacao mass refers to what is obtained by grinding cacao nibs. Cocoa butter refers to an oil and/or fat obtained from cacao beans, cacao nibs, or cacao mass. In the present specification, chocolate is not limited to the provisions of the Fair Competition Code Concerning Labeling of Chocolates established by the Japan Chocolate Industry Fair Trade Council, but refers to compositions in general that contain a cacao bean-derived component.

In the present specification, a plant-based milk material is a plant-derived raw material that can be substituted for milk raw materials used in normal milk chocolate, and examples thereof include grain-derived materials such as oat milk and rice milk, bean-derived materials such as soy milk (including prepared soy milk), and nut-derived materials such as almond milk. Plant-based milk is made by finely crushing the seeds and nuts of these plants and extracting them with water. The amount of the plant-based milk material added differs depending on the type of chocolate to be produced (bitter type or sweet type), but is generally 5 to 30% by weight.

Hereinafter, production examples conducted by the present inventors are shown, and based on the results of a sensory test conducted by five panelists for the chocolate produced in each production example, the results of examining the relationship between the particle size distribution and the evaluation results by the sensory test are reported. Here, the particle size distribution is to be specified using a predetermined index (representative value), but the distribution shape is not questioned as long as the value of the index satisfies the predetermined range requirement of the present invention, and it is considered that it may be a single peak or multiple peaks such as a bimodal distribution. The method of fine pulverization is not limited to the refiner described in the following production examples, and another means can be used as long as a desired particle size can be obtained. In the following production examples, the case where oat milk powder is used as the plant-based milk material and the case where soy milk powder is used are examined, but it is considered that similar results can be obtained even when other plant-based milk materials are used. The other components including cacao mass and cocoa butter have the same raw materials and contents in all production examples.

### (Production Example 1)

In order to produce a chocolate having the composition shown in Table 1, first, to 15 parts by weight of oat milk powder (what is obtained by powdering liquid oat milk by a spray-drying method, oat milk solid content 42%), 18 parts by weight of cacao mass, and 43 parts by weight of saccharides (sugar), cocoa butter and other (other than cocoa butter) vegetable oils and/or fats were added to form a composition with a fat content of 25 to 28%, and mixed with a mixer (HOBART, Model: A120) to prepare a mass of chocolate raw material composition.

The prepared raw material composition was ground into a homogeneous and smooth fine powder with a refiner (BUHLER, Model: SDY-200). After adding the remaining cocoa butter and other vegetable oils and/or fats, 0.5 parts by weight of an emulsifier, and 0.1 parts by weight of a flavoring agent to the obtained fine powder raw material composition to adjust to the composition shown in Table 1, conching was performed with a mixer (HOBART, Model: A120) to prepare a liquid dough, and the prepared dough was subjected to tempering, filling, cooling, and mold removal in the same manner as a normal chocolate production method to produce chocolate.

For a sample taken from the produced chocolate, a wet measurement was performed using a laser diffraction/scattering particle size distribution analyzer ("MT3300EXII" manufactured by MicrotracBEL Corp.) with isopropyl alcohol as a dispersion medium. The dispersion liquid concentration was adjusted to be within the measurement concentration range displayed on the same device. The obtained summary data (various indices representing the particle size distribution) are shown in Table 2. The produced chocolate was tasted by five trained panelists, and five items of graininess, grain-like odor, richness, sweetness, and overall deliciousness (all judged by comparison with a normal chocolate using a milk raw material) were evaluated on a 5-point scale according to the following criteria, and the average of the evaluations of the five panelists was taken as the evaluation value. The results are shown in Table 3.

### <Evaluation Criteria>

(Regarding graininess)
   5: No graininess is felt at all
   4: Almost no graininess is felt
   3: Slight graininess is felt
   2: Graininess is felt
   1: Very strong graininess is felt
(Regarding grain-like odor)
   5: No grain-like odor is felt
   4: Slight grain-like odor is felt
   3: Grain-like odor is felt
   2: Strong grain-like odor is felt
   1: Very strong grain-like odor is felt
(Regarding other items)
   5: Equal to or better than the case where a milk raw material is used
   4: Almost comparable compared to the case where a milk raw material is used
   3: Difference from the case where a milk raw material is used is within an acceptable range
   2: Difference from the case where a milk raw material is used exceeds an acceptable range
   1: Difference from the case where a milk raw material is used is too large for commercialization

### (Production Example 2)

As shown in Table 1, a chocolate raw material composition was prepared with the same composition as in Production Example 1, and this was ground into a homogeneous and smooth fine powder with a refiner (BUHLER, Model: SDY-200). However, in this Production Example 2, the fine pulverization step was performed with a weaker refiner pressure than in Production Example 1. Then, the remaining raw materials (same as in Production Example 1) were added to the obtained fine powder raw material composition, and in the same manner as in Production Example 1, conching was performed with a mixer (HOBART, Model: A120) to prepare a liquid dough, and the prepared dough was subjected to tempering, filling, cooling, and mold removal in the same manner as a normal chocolate production method to produce chocolate.

For a sample taken from the produced chocolate, a wet measurement was performed using a laser diffraction/scattering particle size distribution analyzer ("MT3300EXII" manufactured by MicrotracBEL Corp.) with isopropyl alcohol as a dispersion medium. The dispersion liquid concentration was adjusted to be within the measurement concentration range displayed on the same device. The obtained summary data (various indices representing the particle size distribution) are shown in Table 2. The produced chocolate was tasted by five trained panelists, and five items of graininess, grain-like odor, richness, sweetness, and overall deliciousness (all judged by comparison with a normal chocolate using a milk raw material) were evaluated on a 5-point scale according to the same criteria as in Production Example 1, and the average of the evaluations of the five panelists was taken as the evaluation value. The results are shown in Table 3.

### (Production Example 3)

As shown in Table 1, a chocolate raw material composition was prepared with the same composition as in Production Examples 1 and 2, and this was ground into a homogeneous fine powder with a refiner (BUHLER, Model: SDY-200). However, in this Production Example 3, the pressure of the refiner in the fine pulverization step was further weakened than in Production Example 2. Then, the remaining raw materials (same as in Production Examples 1 and 2) were added to the obtained fine powder raw material composition, and in the same manner as in Production Examples 1 and 2, conching was performed with a mixer (HOBART, Model: A120) to prepare a liquid dough, and the prepared dough was subjected to tempering, filling, cooling, and mold removal in the same manner as a normal chocolate production method to produce chocolate.

For a sample taken from the produced chocolate, a wet measurement was performed using a laser diffraction/scattering particle size distribution analyzer ("MT3300EXII" manufactured by MicrotracBEL Corp.) with isopropyl alcohol as a dispersion medium. The dispersion liquid concentration was adjusted to be within the measurement concentration range displayed on the same device. The obtained summary data (various indices representing the particle size distribution) are shown in Table 2. The produced chocolate was tasted by five trained panelists, and five items of graininess, grain-like odor, richness, sweetness, and overall deliciousness (all judged by comparison with a normal chocolate using a milk raw material) were evaluated on a 5-point scale according to the same criteria as in Production Examples 1 and 2, and the average of the evaluations of the five panelists was taken as the evaluation value. The results are shown in Table 3.

### (Production Example 4)

As shown in Table 1, a chocolate raw material composition was prepared with the same composition as in Production Example 1, except that the content of oat milk was increased to 30 parts by weight, and the content of saccharides was decreased by an amount corresponding to the increase. This was ground into a homogeneous and smooth fine powder with a refiner (BUHLER, Model: SDY-200). Then, the remaining raw materials (same as in Production Examples 1 to 3) were added to the obtained fine powder raw material composition, and in the same manner as in Production Examples 1 to 3, conching was performed with a mixer (HOBART, Model: A120) to prepare a liquid dough, and the prepared dough was subjected to tempering, filling, cooling, and mold removal in the same manner as a normal chocolate production method to produce chocolate.

For a sample taken from the produced chocolate, a wet measurement was performed using a laser diffraction/scattering particle size distribution analyzer ("MT3300EXII" manufactured by MicrotracBEL Corp.) with isopropyl alcohol as a dispersion medium. The dispersion liquid concentration was adjusted to be within the measurement concentration range displayed on the same device. The obtained summary data (various indices representing the particle size distribution) are shown in Table 2. The produced chocolate was tasted by five trained panelists, and five items of graininess, grain-like odor, richness, sweetness, and overall deliciousness (all judged by comparison with a normal chocolate using a milk raw material) were evaluated on a 5-point scale according to the same criteria as in Production Examples 1 to 3, and the average of the evaluations of the five panelists was taken as the evaluation value. The results are shown in Table 3.

### (Production Example 5)

As shown in Table 1, a chocolate raw material composition was prepared with the same composition as in Production Example 4, and this was ground into a homogeneous fine powder with a refiner (BUHLER, Model: SDY-200). However, in this Production Example 5, the pressure of the fine pulverization step was weaker than in Production Example 4. Then, the remaining raw materials (same as in Production Examples 1 to 4) were added to the obtained fine powder raw material composition, and in the same manner as in Production Examples 1 to 4, conching was performed with a mixer (HOBART, Model: A120) to prepare a liquid dough, and the prepared dough was subjected to tempering, filling, cooling, and mold removal in the same manner as a normal chocolate production method to produce chocolate.

For a sample taken from the produced chocolate, a wet measurement was performed using a laser diffraction/scattering particle size distribution analyzer ("MT3300EXII" manufactured by MicrotracBEL Corp.) with isopropyl alcohol as a dispersion medium. The dispersion liquid concentration was adjusted to be within the measurement concentration range displayed on the same device. The obtained summary data (various indices representing the particle size distribution) are shown in Table 2. The produced chocolate was tasted by five trained panelists, and five items of graininess, grain-like odor, richness, sweetness, and overall deliciousness (all judged by comparison with a normal chocolate using a milk raw material) were evaluated on a 5-point scale according to the same criteria as in Production Examples 1 to 4, and the average of the evaluations of the five panelists was taken as the evaluation value. The results are shown in Table 3.

### (Production Example 6)

As shown in Table 1, a chocolate raw material composition was prepared with the same composition as in Production Example 1, except that oat milk powder was replaced with soy milk powder (soy milk solid content 100%), and this was ground into a homogeneous and smooth fine powder with a refiner (BUHLER, Model: SDY-200). Then, the remaining raw materials (same as in Production Examples 1 to 5) were added to the obtained fine powder raw material composition, and in the same manner as in Production Examples 1 to 5, conching was performed with a mixer (HOBART, Model: A120) to prepare a liquid dough, and the prepared dough was subjected to tempering, filling, cooling, and mold removal in the same manner as a normal chocolate production method to produce chocolate.

For a sample taken from the produced chocolate, a wet measurement was performed using a laser diffraction/scattering particle size distribution analyzer ("MT3300EXII" manufactured by MicrotracBEL Corp.) with isopropyl alcohol as a dispersion medium. The dispersion liquid concentration was adjusted to be within the measurement concentration range displayed on the same device. The obtained summary data (various indices representing the particle size distribution) are shown in Table 2. The produced chocolate was tasted by five trained panelists, and five items of graininess, grain-like odor, richness, sweetness, and overall deliciousness (all judged by comparison with a normal chocolate using a milk raw material) were evaluated on a 5-point scale according to the same criteria as in Production Examples 1 to 5, and the average of the evaluations of the five panelists was taken as the evaluation value. The results are shown in Table 3.

### (Production Example 7)

As shown in Table 1, a chocolate raw material composition was prepared with the same composition as in Production Example 6, and this was ground into a homogeneous fine powder with a refiner (BUHLER, Model: SDY-200). However, in this Production Example 7, the pressure of the fine pulverization step was weaker than in Production Example 6. Then, the remaining raw materials (same as in Production Examples 1 to 6) were added to the obtained fine powder raw material composition, and in the same manner as in Production Examples 1 to 6, conching was performed with a mixer (HOBART, Model: A120) to prepare a liquid dough, and the prepared dough was subjected to tempering, filling, cooling, and mold removal in the same manner as a normal chocolate production method to produce chocolate.

For a sample taken from the produced chocolate, a wet measurement was performed using a laser diffraction/scattering particle size distribution analyzer ("MT3300EXII" manufactured by MicrotracBEL Corp.) with isopropyl alcohol as a dispersion medium. The dispersion liquid concentration was adjusted to be within the measurement concentration range displayed on the same device. The obtained summary data (various indices representing the particle size distribution) are shown in Table 2. The produced chocolate was tasted by five trained panelists, and five items of graininess, grain-like odor, richness, sweetness, and overall deliciousness (all judged by comparison with a normal chocolate using a milk raw material) were evaluated on a 5-point scale according to the same criteria as in Production Examples 1 to 6, and the average of the evaluations of the five panelists was taken as the evaluation value. The results are shown in Table 3.

### (Production Example 8)

In order to produce the chocolate shown in Table 1, first, to 18 parts by weight of cacao mass and 43 parts by weight of saccharides (sugar), cocoa butter and other (other than cocoa butter) vegetable oils and/or fats were added to form a composition with a fat content of 25 to 28%, and mixed with a mixer (HOBART, Model: A120) to prepare a mass of chocolate raw material composition.

The prepared raw material composition was ground into a homogeneous and smooth fine powder with a refiner (BUHLER, Model: SDY-200). After adding the remaining cocoa butter and other vegetable oils and/or fats, 0.5 parts by weight of an emulsifier, and 0.1 parts by weight of a flavoring agent to the obtained fine powder raw material composition and performing conching with a mixer (HOBART, Model: A120), 15 parts by weight of oat milk powder was added and mixed to prepare a liquid dough adjusted to the composition shown in Table 1, and the prepared dough was subjected to tempering, filling, cooling, and mold removal in the same manner as a normal chocolate production method to produce chocolate.

For a sample taken from the produced chocolate, a wet measurement was performed using a laser diffraction/scattering particle size distribution analyzer ("MT3300EXII" manufactured by MicrotracBEL Corp.) with isopropyl alcohol as a dispersion medium. The dispersion liquid concentration was adjusted to be within the measurement concentration range displayed on the same device. The obtained summary data (various indices representing the particle size distribution) are shown in Table 2. The produced chocolate was tasted by five trained panelists, and five items of graininess, grain-like odor, richness, sweetness, and overall deliciousness (all judged by comparison with a normal chocolate using a milk raw material) were evaluated on a 5-point scale according to the same criteria as in Production Examples 1 to 7, and the average of the evaluations of the five panelists was taken as the evaluation value. The results are shown in Table 3.

### (Production Example 9)

A chocolate raw material composition was prepared with the same composition as in Production Example 8 (except that the oat milk powder added after the fine pulverization step was replaced with soy milk powder), and this was ground into a homogeneous and smooth fine powder with a refiner (BUHLER, Model: SDY-200). Then, after adding the remaining cocoa butter and other vegetable oils and/or fats, 0.5 parts by weight of an emulsifier, and 0.1 parts by weight of a flavoring agent to the obtained fine powder raw material composition and performing conching with a mixer (HOBART, Model: A120) in the same manner as in Production Examples 1 to 8, 15 parts by weight of soy milk powder was added and mixed to prepare a liquid dough adjusted to the composition shown in Table 1, and the prepared dough was subjected to tempering, filling, cooling, and mold removal in the same manner as a normal chocolate production method to produce chocolate.

For a sample taken from the produced chocolate, a wet measurement was performed using a laser diffraction/scattering particle size distribution analyzer ("MT3300EXII" manufactured by MicrotracBEL Corp.) with isopropyl alcohol as a dispersion medium. The dispersion liquid concentration was adjusted to be within the measurement concentration range displayed on the same device. The obtained summary data (various indices representing the particle size distribution) are shown in Table 2. The produced chocolate was tasted by five trained panelists, and five items of graininess, grain-like odor, richness, sweetness, and overall deliciousness (all judged by comparison with a normal chocolate using a milk raw material) were evaluated on a 5-point scale according to the same criteria as in Production Examples 1 to 8, and the average of the evaluations of the five panelists was taken as the evaluation value. The results are shown in Table 3.

### (Production Example 10 - Reference Example)

In order to compare the particle size distribution with the chocolate produced in Production Examples 1 to 9, chocolate was produced by the same procedure as in Production Example 8 and Production Example 9, except that adding and mixing oat milk powder or soy milk powder after conching was not performed. The raw material composition of the chocolate of this Production Example 10 corresponds to the raw material composition of the chocolate of Production Examples 1, 2, 3, 6, 7, 8, and 9 from which the plant-based milk raw material has been removed. The particle size distribution of the chocolate produced in this Production Example 10 was also measured in the same manner as in Production Examples 1 to 9. The obtained summary data (various indices representing the particle size distribution) are shown in Table 2.

**Table 1 Chocolate Composition**

| Production Example | 1 | 2 | 3 | 4 | 5 | 6 | 7 | 8 | 9 |
|---|---|---|---|---|---|---|---|---|---|
| Oat milk powder | 15 | 15 | 15 | 30 | 30 | | | 15 | |
| Soy milk powder | | | | | | 15 | 15 | | 15 |
| Cacao mass | 18 | 18 | 18 | 18 | 18 | 18 | 18 | 18 | 18 |
| Saccharides | 43 | 43 | 43 | 28 | 28 | 43 | 43 | 43 | 43 |
| Cocoa butter | 18 | 18 | 18 | 18 | 18 | 18 | 18 | 18 | 18 |
| Other vegetable oils and/or fats | 5 | 5 | 5 | 5 | 5 | 5 | 5 | 5 | 5 |
| Emulsifier | 0.5 | 0.5 | 0.5 | 0.5 | 0.5 | 0.5 | 0.5 | 0.5 | 0.5 |
| Flavoring agent | 0.1 | 0.1 | 0.1 | 0.1 | 0.1 | 0.1 | 0.1 | 0.1 | 0.1 |

| | | | | | | | | | |
|---|---|---|---|---|---|---|---|---|---|
| (Unit: parts by weight) | | | | | | | | | |

**Table 2 Summary Data of Particle Size Distribution Measurement Results for Each Production Example**

| Production Example | | 1 | 2 | 3 | 4 | 5 | 6 | 7 | 8 | 9 | 10 |
|---|---|---|---|---|---|---|---|---|---|---|---|
| MV | (µm) | 5.4 | 18.7 | 26.5 | 8.13 | 36.9 | 9.01 | 30.5 | 33.2 | 25.1 | 7.46 |
| MN | (µm) | 2.33 | 2.97 | 3.09 | 2.57 | 3.42 | 2.64 | 3.48 | 2.62 | 2.64 | 2.70 |
| MA | (µm) | 2.33 | 2.97 | 3.09 | 2.57 | 14.2 | 5.78 | 12.9 | 7.18 | 7.61 | 5.22 |
| CS | (m²/ml) | 1.55 | 0.65 | 0.53 | 1.18 | 0.42 | 1.04 | 0.46 | 0.84 | 0.79 | 1.15 |
| 10% | (µm) | 2.23 | 3.94 | 4.65 | 2.61 | 5.57 | 2.85 | 5.26 | 3.16 | 3.34 | 2.74 |
| 50% | (µm) | 4.35 | 16.2 | 20.9 | 6.37 | 30.6 | 7.81 | 24.4 | 9.27 | 10.4 | 6.59 |
| 90% | (µm) | 9.64 | 36.2 | 53.7 | 15.5 | 73.7 | 16.5 | 61.6 | 104 | 64.7 | 13.2 |

| | | | | | | | | | | | |
|---|---|---|---|---|---|---|---|---|---|---|---|
| MV: Volume average diameter MN: Number average diameter MA: Area average diameter CS: Specific surface area 10%: 10% passing diameter 50%: 50% passing diameter 90%: 90% passing diameter | | | | | | | | | | | |

**Table 3 Sensory Test Results for Each Production Example**

| Production Example | 1 | 2 | 3 | 4 | 5 | 6 | 7 | 8 | 9 |
|---|---|---|---|---|---|---|---|---|---|
| Graininess | 5 | 3.6 | 1.2 | 5 | 1 | 5 | 1 | 1.4 | 1.2 |
| Grain-like odor | 4.4 | 3.6 | 2 | 3.2 | 1.6 | 2.6 | 1.4 | 1.6 | 1.6 |
| Richness | 4.6 | 3.4 | 1.8 | 4 | 1.4 | 3.2 | 1.4 | 2 | 2.2 |
| Sweetness | 3.2 | 3 | 3.6 | 2.8 | 3 | 2.6 | 2.8 | 3.2 | 2.8 |
| Deliciousness | 4.8 | 4.6 | 2.6 | 3.6 | 1.8 | 3 | 2 | 2.4 | 1.8 |

### (Discussion of Evaluation of Each Production Example)

The evaluation results of the sensory test for each production example shown in Table 3 are all 5-point evaluations, and the median value thereof is 3 (difference from the case where a milk raw material is used is within an acceptable range). Therefore, a case where the evaluation value is 3 or more was regarded as a good result exceeding the standard for the item of the production example.

In light of the above evaluation criteria, it can be said that regarding sweetness, although some production examples do not slightly reach the standard (the lowest evaluation is 2.6 for Production Example 6), almost all production examples show good results that clear the standard. This seems to indicate that there are few problems with sweetness even when a plant-based milk material is used.

Next, regarding graininess, Production Examples 3, 5, 7, 8, and 9 show remarkably poor results, which shows a strong positive correlation with the large values of the volume average diameter (MV) and the 90% passing diameter (90%). This seems to indicate that to suppress graininess, it is effective to reduce the overall particle size and particularly to suppress the amount of large particles.

Next, regarding grain-like odor, Production Examples 3, 5, 6, 7, 8, and 9 show poor results that do not reach the standard. It is considered that, compared to the case of graininess, almost the same results are obtained, except that Production Example 6 shows a poor result that does not reach the standard. Although Production Example 6 does not reach the standard, the result is better than those of Production Examples 3, 5, 7, 8, and 9, and it seems that although it did not reach the standard because the grain-like odor of soy milk is more difficult to suppress than that of oat milk, the effect of adjusting the particle size is somewhat present. However, to further supplement this point, whereas the soy milk powder used is 100% soy milk, the oat milk powder used is 42% oat milk, and since the net content of oat milk is less than half the amount shown in the table, it can be said that there is not much difference in the strength of the grain-like odor between oat milk and soy milk in practice.

Next, regarding richness, Production Examples 3, 5, 7, 8, and 9 show poor results that do not reach the standard, which shows the same result as in the case of graininess.

Finally, regarding the overall deliciousness, specifically, whether the chocolate shows a deliciousness comparable to that of chocolate produced using a milk raw material, Production Examples 3, 5, 7, 8, and 9 also show poor results that do not reach the standard, which shows the same result as in the case of graininess and richness.

To summarize the above, regarding sweetness, it does not decrease so much compared to the case where a milk raw material is used even when a plant-based milk material is used. On the other hand, to suppress graininess and grain-like odor, enhance richness, and realize a deliciousness comparable to that of chocolate produced using a milk raw material, it can be said that it is effective to perform fine pulverization to keep the volume average diameter (MV) and the 90% passing diameter (90%) small. In contrast, the number average diameter (MN), the area average diameter (MA), the 10% passing diameter, and the 50% passing diameter may not show a correlation with the poor results of Production Examples 3, 5, 7, 8, and 9. The reason for this is thought to be that these indices have a tendency for the numerical values to shift to the small particle size side, making it difficult to reflect the content rate of large particle size particles. These indices are thought to be suitable when the function of individual particles individually affects the evaluation results, but it can be said that they are not very suitable as indices when it is important to be finely pulverized as in the present invention (that is, when it is desired to reduce the abundance of large particle size particles). From the above, in the present invention, the overall degree of fine pulverization is defined by the volume average diameter MV, and the existence rate of large particle size particles is defined by the 90% passing diameter. Specifically, it is effective to set the volume average diameter to 20 µm or less and the 90% passing diameter to 50 µm or less. Preferably, the volume average diameter should be 15 µm or less and the 90% passing diameter should be 40 µm or less, and more preferably, the volume average diameter should be 10 µm or less and the 90% passing diameter should be 20 µm or less. From the viewpoint of further pursuing the reduction of grain-like odor, the improvement of richness, and the overall deliciousness, still more preferably, the volume average diameter should be 8 µm or less and the 90% passing diameter should be 10 µm or less.

By the way, in Production Examples 8 and 9, the plant-based milk material is added after conching, and since the component added later is not finely pulverized, a desired particle size distribution is not obtained. Therefore, it can be said that it is preferable to add the plant-based milk material to the chocolate composition before the fine pulverization step.

The embodiments of the present invention have been described above, and a summary thereof is as follows.

### (First Embodiment)

A chocolate comprising 5 to 30% by weight of a plant-based milk material, wherein a volume average diameter when a particle size distribution is measured using a wet-type laser diffraction/scattering method is 20 µm or less, and a 90% passing diameter is 50 µm or less.

### (Second Embodiment)

The chocolate of the first embodiment, wherein the volume average diameter is 15 µm or less, and the 90% passing diameter is 40 µm or less.

### (Third Embodiment)

The chocolate of the first embodiment, wherein the volume average diameter is 10 µm or less, and the 90% passing diameter is 20 µm or less.

### (Fourth Embodiment)

The chocolate of any one of the first to third embodiments, wherein the plant-based milk material is oat milk powder or soy milk powder.

### (Fifth Embodiment)

A method for producing the chocolate of any one of the first to fourth embodiments, the method comprising finely pulverizing a mixture in which the plant-based milk material is mixed with other chocolate raw materials.

This application claims priority from Japanese Patent Application No. 2023-058471 filed on March 31, 2023, the contents of which are incorporated herein by reference.

## Claims

1. A chocolate comprising 5 to 30% by weight of a plant-based milk material, wherein a volume average diameter when a particle size distribution is measured using a wet-type laser diffraction/scattering method is 20 µm or less, and a 90% passing diameter is 50 µm or less.

2. The chocolate according to claim 1, wherein the volume average diameter is 15 µm or less, and the 90% passing diameter is 40 µm or less.

3. The chocolate according to claim 1, wherein the volume average diameter is 10 µm or less, and the 90% passing diameter is 20 µm or less.

4. The chocolate according to claim 1, wherein the plant-based milk material is oat milk powder or soy milk powder.

5. A method for producing the chocolate according to any one of claims 1 to 4, the method comprising finely pulverizing a mixture in which the plant-based milk material is mixed with other chocolate raw materials.
